# EUROPEAN PATENT APPLICATION

(11) **EP 1 788 768 A2**
(43) Date of publication of application: **23.05.2007**
(21) Application number: 06015814.4
(22) Date of filing: 28.07.2006
(51) Int. Cl.: H04L 27/26

(54) **System and method for reducing dynamic range of modulated signals without increasing out-of-band-power**

(30) Priority: 21.11.2005 US 285559
(71) Applicant: Agilent Technologies, Inc., Santa Clara, CA 95051 (US)
(72) Inventor: Corredoura, Paul L., Redwood City,CA. 94062 (US)
(74) Representative: Liesegang, Eva

(57) **Abstract**

A signal processing system 1002 and method 900 which operates to reduce a crest factor of an input signal without increasing the signal bandwidth. An embodiment provides for identifying 908 peaks in the input signal which exceed a clipping threshold. The characteristics of such identified peaks can then be used to determine a clipping wavelet which can be added 916 to a waveform of the input signal so that the peak will not exceed the clipping threshold. The addition of the wavelet is a linear operation, and the clipping wavelet is limited in terms of bandwidth and time, such that it does not increase the out-of-band spectral content of the input signal.

## Description

### BACKGROUND

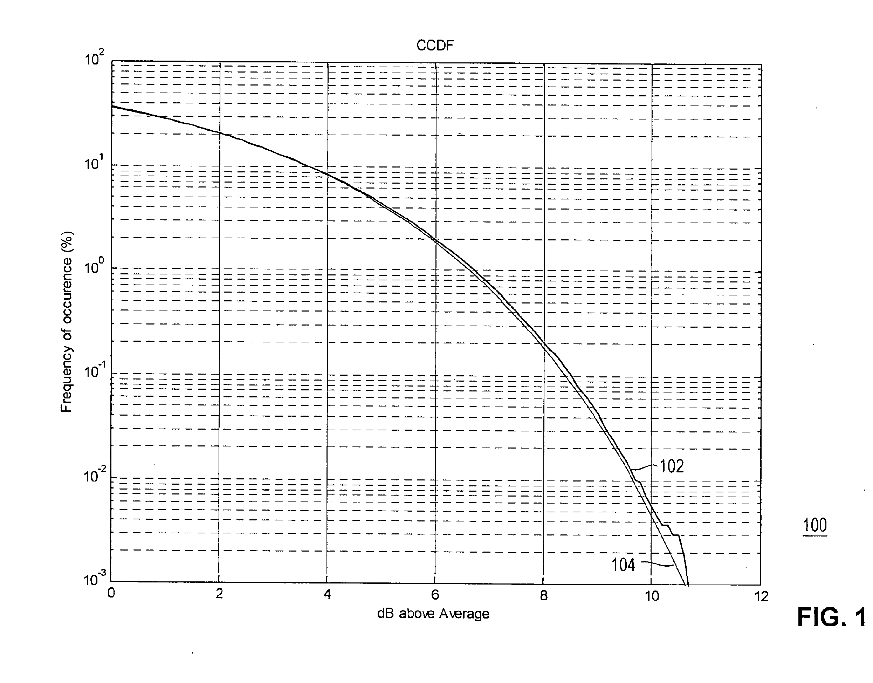

Modem RF modulation standards such as code division multiple access (CDMA), wideband CDMA, or Orthogonal Frequency Division Multiplexing (OFDM) can create signals with very high crest factors. The term crest factor generally refers to the ratio of the peak power to the average power in a signal. For example, if a signal has an average power of 1 Watt but has occasional peaks of 10 Watts, it would have a crest factor of 10 dB. Fig. 1 shows for example a Complementary Cumulative Distribution Function (CCDF) plot 100 of a single carrier wideband CDMA waveform that would be transmitted from a cell base station. Curve 102 shows the distribution of signal power beyond the mean power level in dB, as compared to a random distribution curve 104. The plot 100 shows that for approximately 0.01 % of the samples the peak power exceeds the mean power by 10 dB. It also shows that the CDMA signal is very similar to the random distribution of noise.

The large spikes in power in a waveform of the CDMA signal can create difficulties for RF electronics, especially amplifiers, since the systems must be designed to handle the peaks without being damaged or creating unwanted distortion which can result in unwanted signals leaking into neighboring channels, where a channel corresponds to a frequency communication band. For the case of amplifiers, the cost of building an amplifier capable of passing the large peaks without creating problematic distortion can be significant. For example, if one needed to amplify a 1 Watt average power signal with a crest factor of 10 by a factor of 10dB, the amplifier would need to be capable of producing 100 Watts (not just 10 Watts) to be able to handle the large crests.

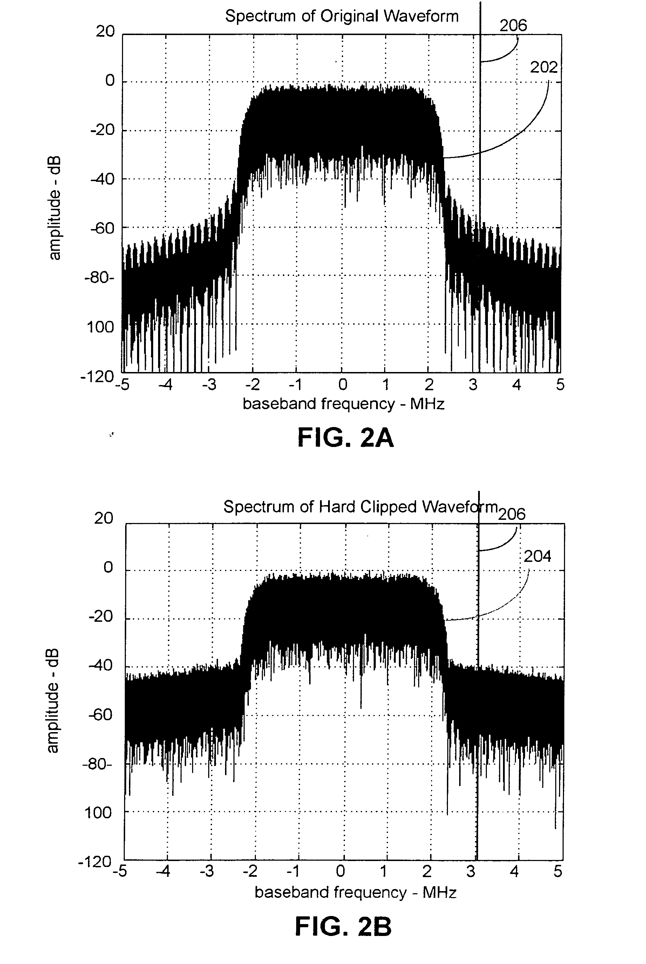

An alternative solution is to process the signal to reduce the crest factor. This process is called clipping, where the clipping operates to reduce the power of peaks in the waveform, so that they do not exceed a predetermined clip level. The simplest method is to limit the signal power to a predetermined level. The problem with hard clipping, which operates to simply block the portion a power peak which exceeds the clip level, is that it creates relatively large amounts of unwanted signal power beyond the frequency band of the original signal. This effect of hard clipping is sometimes referred to as spectral leakage. Figs. 2A and 2B show the base band spectrum 202 of a single carrier CDMA waveform at a particular time, and the base band spectrum 204 of the same waveform 202 after it has been hard-clipped to reduce the peak signal power to 8 dB above the mean. The band line 206 is provided to show the lower frequency, of the next higher frequency communication channel, where in general the required bandwidth for each carrier is about 5 MHz. As is shown by reference to signals 202 and 204 a hard-clipping process, where all power above the clipping level is simply cut-off from the waveform, significantly increases the out-of-band power. In this context the out-of-band power is a reference to the power out of the 5 MHz communication band, and the in-band power is power which is in the communication band of about 5 MHz, and the hard clipping acts as a non-linear operation which significantly changes the frequency characteristics of the original signal, and particularly problematic is that fact that one of the non-linear effects is to significantly increase the power in the frequency spectrum out of the allocated frequency band of the communication channel. The hard clipping process operates to reduce the dynamic range of the signal, but it significantly increases of the out-of-band energy. Thus, the hard clipping process operates to reduce the dynamic range of the signal, but it significantly increases the out-of-band power.

Another method of clipping is soft clipping, where the signal is processed through a non-linear operation that passes small amplitude signals through with a fixed gain but exhibits smaller and smaller gain as the signal amplitude increases. This method is basically a compromise with hard clipping. It has less spectral leakage but does not clip perfectly. In some previous cases in order to reduce the out-of-band power generated by the clipping operation a post-clipping filter has been used. Unfortunately, using the filter can increase the crest factor. So it becomes a difficult problem to satisfy both the need to reduce the crest factor and also not generate out-of-band power.

### BRIEF DESCRIPTION OF THE DRAWINGS

Fig. 1 is a graph showing a CCDF plot of a CDMA signal which could be transmitted from a cell base station.
Figs. 2A and 2B are graphs which show a baseband spectrum of a single carrier WCDMA waveform and the effect of applying hard clipping to the WCDMA waveform.
Fig. 3 shows a block diagram of an embodiment of the system of the invention.
Fig. 4 is a block diagram showing an embodiment of a crest signal processing system of the invention.
Figs. 5A -5B illustrate a clipping wavelet in the time domain and in the frequency domain.
Fig. 6 is a graph illustrating a method of the invention, where a clipping wavelet is determined based characteristics of a peak which exceeds a clipping threshold.
Fig. 7 is a CCDF plot illustrating the effect of applying an embodiment of a method of the invention to a CDMA signal.
Fig. 8A -8C are spectrum plots which contrast the effects of hard clipping and Gaussian clipping on a CDMA waveform.
Fig. 9 is a flow chart illustrating an embodiment of a method of the invention.
Fig. 10 is a block diagram of an embodiment of a system of the invention.
Fig. 11 is a block diagram of an alternative embodiment of a system of the invention.

### DETAILED DESCRIPTION

An embodiment of a system and method of the invention herein provide for processing a signal which reduces the crest factor of the signal, and advantageously this processing does not increase the out-of-band power. This operation provides for identifying peaks in a waveform of the signal which exceed a clipping threshold, and analyzing characteristics of the waveform including identifying individual peaks in the waveform, and then adding a wavelet to the waveform. The wavelet is generally a waveform which has a limited frequency band, and is of a limited time duration. This addition of the wavelet provides a processed waveform with lower crest factor than the original waveform, and this reduction in the crest fact is achieved without generating additional out-of-band power. This is possible because the entire operation is completely linear and the spectral qualities of the added wavelet are selected based on the specific characteristics of the various peaks of the waveform and the assigned channel bandwidth.

Because the operation is linear, the spectral leakage problem normally associated with non-linear clipping operations does not exist. The finite duration wavelets, which are added to the original waveform to reduce the peak signal amplitude, can be specifically tailored for the type of waveform being clipped. By providing a waveform which is band limited, the issue of adding unwanted out-of-band power into an adjacent communication channel is avoided. As will be discussed in more detail below the added wavelets can be computed as needed, or they can precomputed and stored in a look-up table, which provides a library of a plurality of different wavelets, to be accessed as required. In one embodiment the system could be implemented in programmable digital hardware, because unlike some other clipping techniques that use analog hardware to perform some of the clipping task, the process herein could be implemented using entirely digital processing.

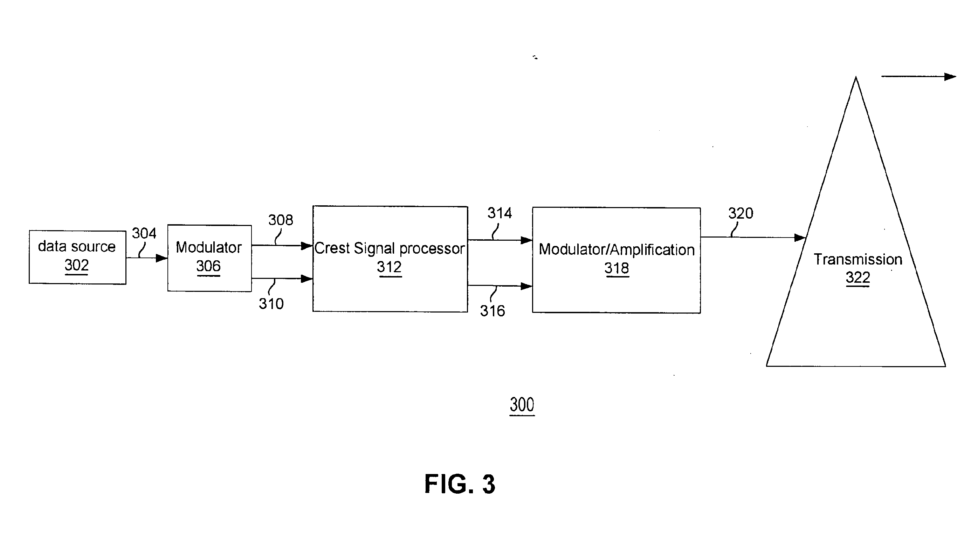

Fig. 3 shows a high level view of a communication system 300 of an embodiment of the invention. The communication system could for example be used in a cellular phone system, or in a wireless communication network. The communication system 300 includes a data source 302. The data source could provide a voice signal information, or it could be some other data source, a data signal 304 is output by the data source 302. A modulator 306 then modulates the signal as defined by one of the numerous existing modulation schemes. The modulated signal output by the modulator 306 will in same cases can be expressed as a complex signal having an inphase component (I) 308 and a quadrature component (Q) 310. The I/Q signal components are input the crest reduction signal processing system 312. Note that the input I/Q signal can be converted by an analog to digital converter (not shown) of the signal processing system 312, and the operation of the signal processing system 312 can be implemented using digital processing hardware and software. The signal processing system 312 operates to reduce peaks of the input signal components below a clipping threshold, using a linear operation which does not increase the out-of-band power. The operation of the crest signal processing system 312 is discussed in more detail below. After the signal processor 312 has reduced the crest factor of the signal, the processed I/Q signals 314 and 316 are input to a modulator/amplifier 318 which operates to up convert the signals 314 and 316 to a RF transmission frequency, and provide amplified RF signal 320 for transmission through a transmission facility 322.

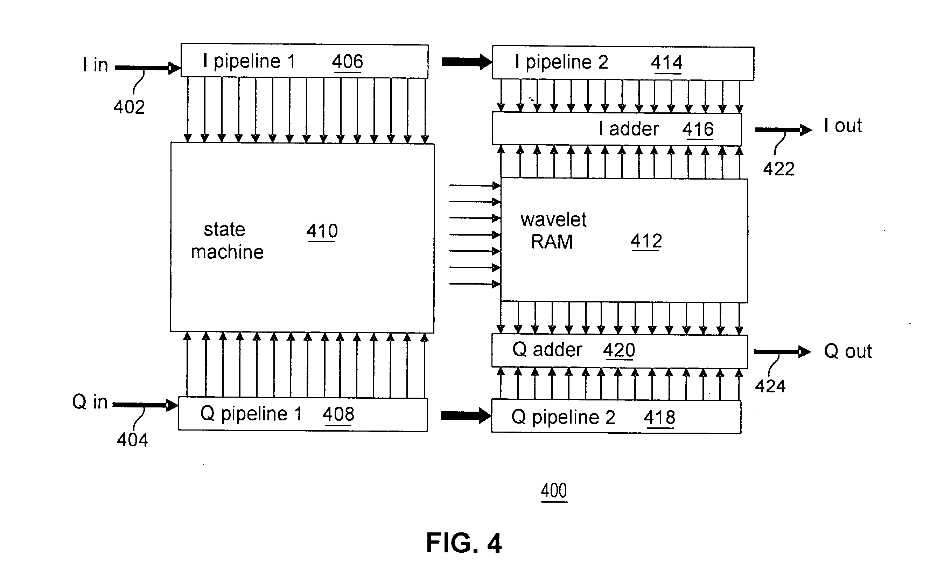

Fig. 4 shows one embodiment of a crest signal processing system 400. The embodiment 400 could be implemented in a field programmable gate area (FPGA) or an ASIC or a combination of both. Additionally, where lower processing speeds are adequate one could consider using a general-purpose digital signal processor and memory, which are programmed to implement the functions described herein. The inphase (I) and quadrature (Q) component signals 402 and 404 of a data stream, corresponding to a data signal input to the system 400, are shown, and each of these different components are temporarily stored in corresponding pipelines 406 and 408. These pipelines 406 and 408 can be realized as a series of registers that store a sufficient collection of input waveform samples to facilitate searching for, and classifying large signal peaks, in the stored waveforms. These pipelines act as memory modules which can in some embodiments store multiple waveforms corresponding to the input signal at different points in time, wherein each different waveform corresponds to a portion of an input signal. In the system 400 a state machine 410 is configured to perform a classification operation, and based on the classification operation, the state machine 410 determines which wavelet stored in a wavelet library 412 should be added to the received waveform to thereby reduce the overall signal amplitude of the various peaks of the waveform, where such peaks exceed the clipping threshold. Thus, the state machine operates as an analyzer which analyzes and identifies the characteristics of the waveform.

The wavelet library 412 could be implemented in a RAM memory. One embodiment the wavelet library 412 contains a plurality of different wavelets, where each wavelet correlates with an associated waveform classification. The waveform classification can operate to correlate identified characteristics of a waveform with a wavelet which can be added so as to reduce any peaks of the waveform that exceed the clipping threshold. In the system 400, the desired wavelet is looked up from the RAM and the in-phase and quadrature components of the wavelet are added to the I,Q data waveforms. In system 400 the adding is implemented by shifting the waveform from the first I pipeline 406 to a second I pipeline 414, and then adding the corresponding a corresponding I wavelet from the library 412, in an I adder register 416. The Q data waveform is then processed in a similar manner where it the Q waveform is shifted from the first Q pipeline 408 to the second Q pipeline 418, and then the adding in done by the Q adder 420. The output signals 422 and 424 can then be used to modulate a RF carrier and transmitted. As will be discussed in more detail below an alternative embodiment of the system would provide for calculating the characteristics of the wavelet, or wavelets to be added to the received waveform in order to provide for reduction of peaks in the waveform to below the desired clipping threshold.

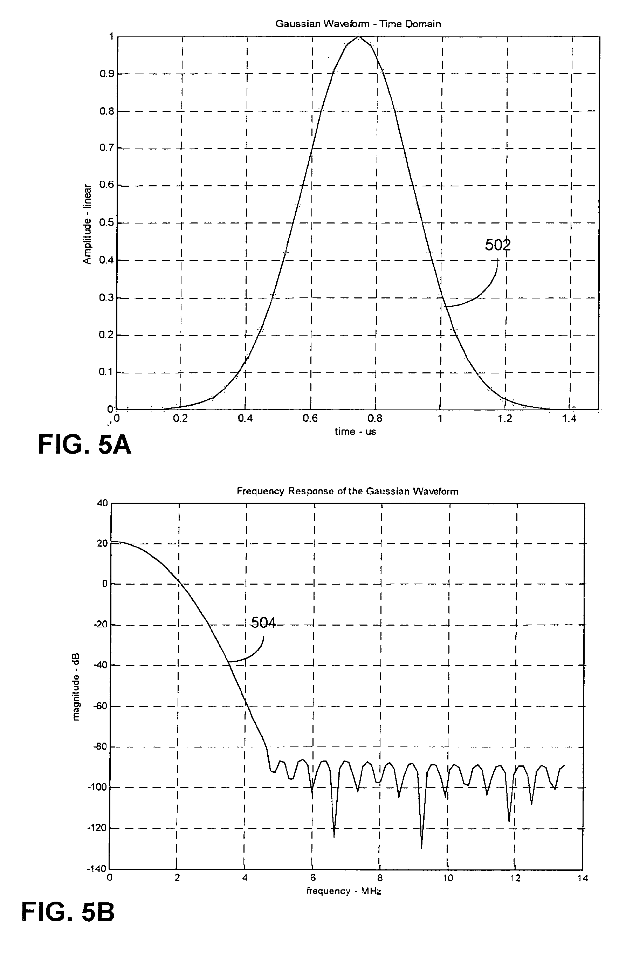

Additional aspects of an embodiment of a method of the invention for performing a linear additive clipping operation are described below. This exemplary method is based on using a Gaussian shaped wavelet, where the addition of the wavelet provides the clipping operation, and the wavelet could be thought of as a clipping wavelet. Gaussian waveforms have the useful property of being Gaussian in both the time domain and the frequency domain. Figure 5 below shows the time and frequency domain responses of a Gaussian waveform. Specifically, the Gaussian signal 502 in the time domain is shown in Fig. 5A, and the Gaussian signal in the frequency domain is shown as signal 504 in Fig. 5B.

In one embodiment of a method of the invention a number of operations are performed. Initially, an input signal is received. This input signal can be a CDMA signal for example. Samples of the input signal are then stored in a memory. This storing of the samples of the input signal, results in a series of time sequenced waveforms, which are spaced apart in time based on a sampling rate. Each stored waveform corresponds to a portion of the input signal, in that it captures the waveform of the signal at given point in time. Generally, the number of waveforms stored should be large enough so that a sufficient number of consecutive waveform samples are buffered, so that an accurate analysis, and processing, of the signal can be achieved.

In the system 400 for example, the length, or size of the IQ buffers should be such that it captures the entire waveform band which is being processed. Additionally the buffers must have sufficient capacity such that there is overlap into previous and post buffers so that the added clipping wavelet, such as a Gaussian function is never truncated, as the truncation of the wavelet could cause spectra leakage.

After a waveform of the received signal has been stored, the amplitude of the buffered complex signal is analyzed to determine characteristics of the waveform. The analysis includes determining if any peak of the buffered sample, or samples, exceeds the desired predetermined maximum desired level, which is referred to herein as a clipping threshold. If a peak is detected which exceeds the clipping threshold, the index location, amplitude and phase of the center of the peak is determined. When a peak exceeding the clipping threshold is identified, then the information characterizing the peak is used to look up the correct Gaussian stored in wavelet library for the pending wavelet addition. The stored Gaussian wavelet could be a full-scale waveform with zero phase. The necessary scaling and phase shifting could be performed by an analyzer in real time using the identified characteristics of the peak, such as location, phase and amplitude. The phase of the wavelet is chosen to be 180 degrees from the phase of the peak which exceeds the clipping threshold, and a scaling threshold for the wavelet can be used, where the scaling threshold is chosen so that the magnitude of the wavelet peak is equal to the amount by which the original waveform peak exceeds the clip threshold. In the system 400 to allow time to look up the wavelet in the wavelet library stored in the RAM, and to allow time for processing the scaling and phase information, the second set of buffers 414 and 418 are provided.

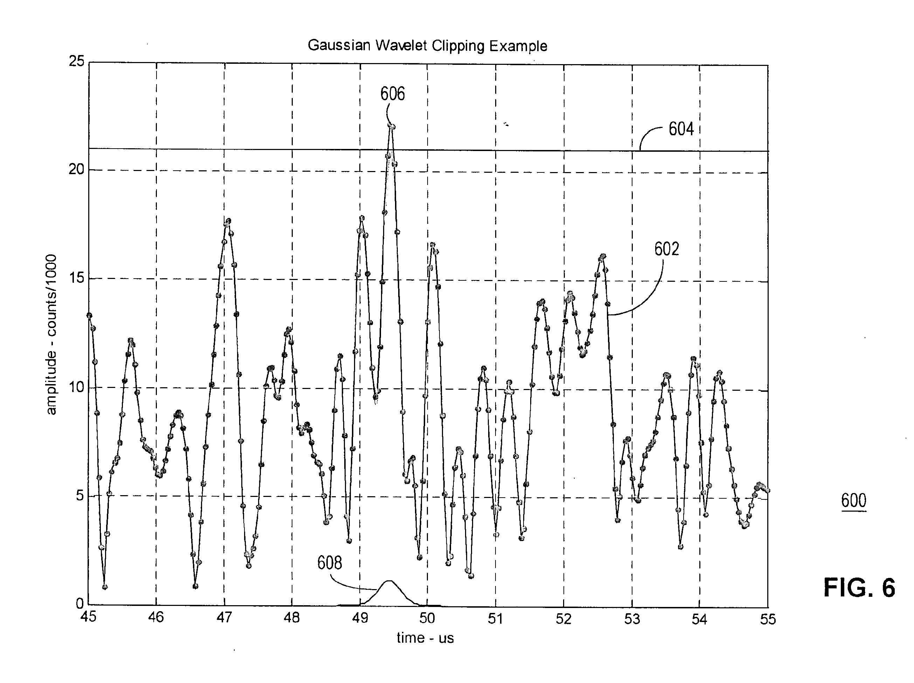

Fig. 6 is a graph 600 illustrating a clipping operation where one of the peaks detected in a single carrier wideband CDMA waveform 602 exceeds a clipping threshold. Specifically, in the graph 600 at a time of slightly under 49.5 microseconds, the waveform 602 has an amplitude which exceeds the clipping threshold 604. Each of the sample points which would be stored temporarily in the buffer, or the memory of the system, are shown as small dots on the waveform 602. The sample point 606 corresponds to the peak which exceeds the clipping threshold 604. Each sample point is analyzed, and when it is determined that the sample exceeds the clipping threshold, then the sample peak is analyzed and its characteristics are identified.

In the case of the peak at sample point 606, the location of the peak is analyzed and determined, the shape of the peak is characterized, and the magnitude of the peak is determined. Based on the identified characteristics of the peak, a Gaussian wavelet is selected, the Gaussian is then scaled based on the amount by which the peak at sample point 606 exceeds the clipping threshold 604, and the Gaussian is then properly phase shifted so that the addition of the Gaussian to the peak at point 606 is reduced so that it does not exceed the clipping threshold. The scaled Gaussian is shown as waveform 608 in Fig. 6. The Gaussian 608 corresponds to the Gaussian shown in Fig. 5A. After the addition of the scaled and phase adjusted Gaussian 608, the magnitude of the peak at point 606 is reduced so that it does not exceed the clipping threshold. This procedure can then be applied across the entire waveform spectrum, and CCDF plots can be used to gauge the effect of the clipping.

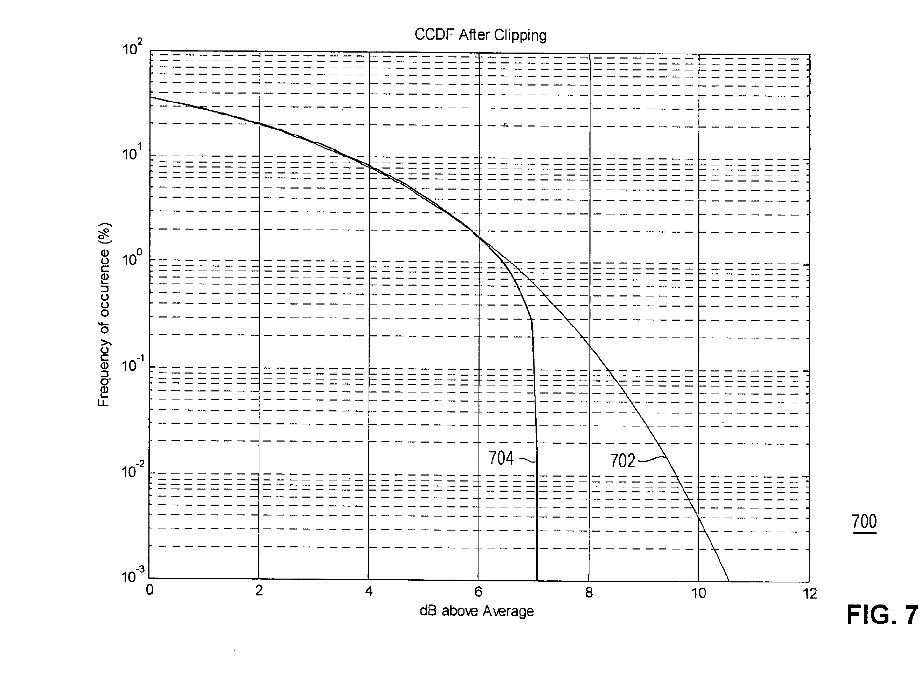

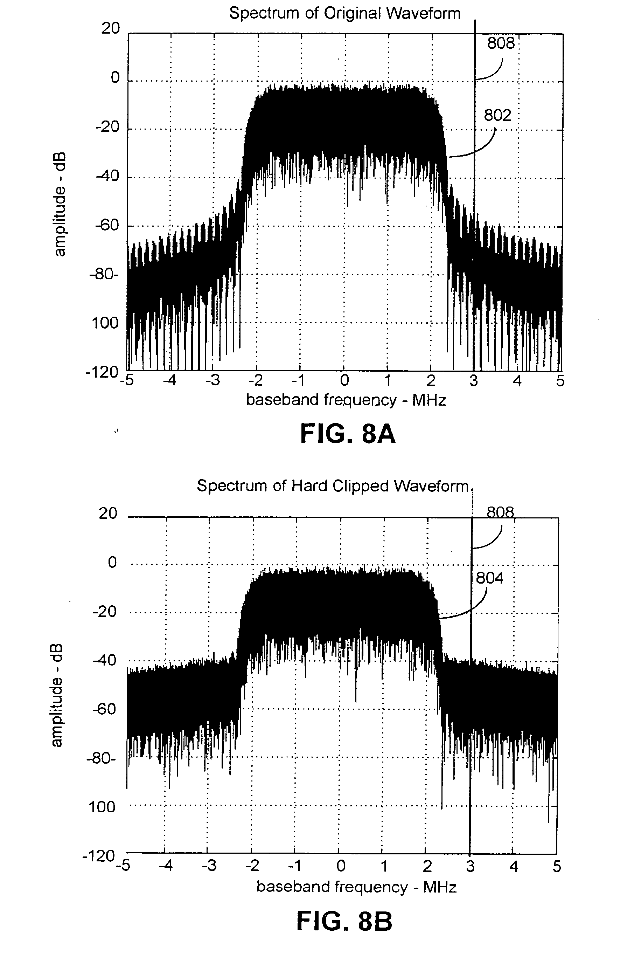

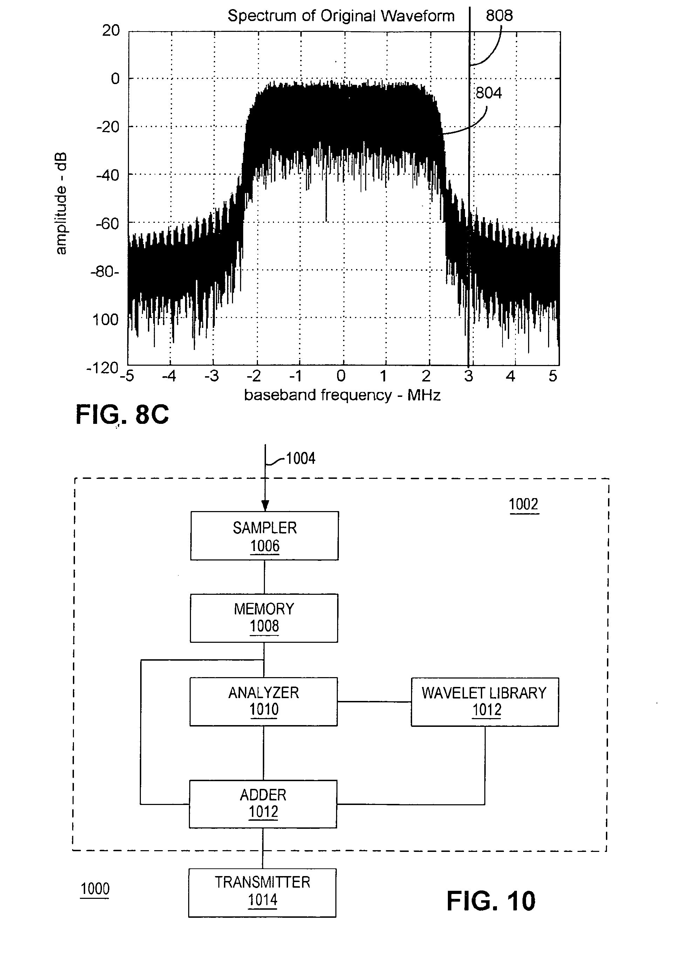

Fig. 7 is a CCDF plot 700 which shows the effect of the clipping operation on a wideband CDMA waveform, such as shown in Fig. 8, as waveform 802. The graph 700 shows a first curve 702 which corresponds to the CCDF for the waveform 802 without the application of wavelet clipping. The curve 704 in Fig. 7 shows the effect of applying wavelet clipping, and a comparison of curve 704 to curve 702 shows that crest factor has been reduced by over 3 dB. This example is not intended to demonstrate how much the waveform can be compressed but rather to provide an illustration of the application of wavelet clipping according to an embodiment herein. As the clipping level is reduced the problem becomes more challenging. Double or even triple peaks which exceed the clipping threshold can occur in a buffered subset of waveforms, increasing the complexity of the determination of the wavelet to add.

Figs. 8A -8C illustrate an effect of the application of the wavelet clipping process as described herein. Fig. 8A shows the baseband spectrum of a raw CDMA waveform 802. Fig. 8B shows the spectrum of a waveform 804 where a non-linear hard clipping operation has been applied to the waveform 802. The band line 808 is provided to show the lower frequency, of the next higher frequency communication channel, where in general the required bandwidth for each carrier is about 5 MHz. Note that the out-of-band power of waveform 804 is significantly greater than the sideband spectral content of waveform 802. Fig. 8C shows a waveform 806 where Gaussian wavelet clipping has been applied according to an embodiment of a system or method herein. The result of the wavelet clipping used to generate waveform 806 is a significantly reduced crest factor, but with almost no change in the out-of-band power of the waveform 806, because the wavelet is tailored so that all the spectral power of the added Gaussian wavelets is in the same band as the original signal.

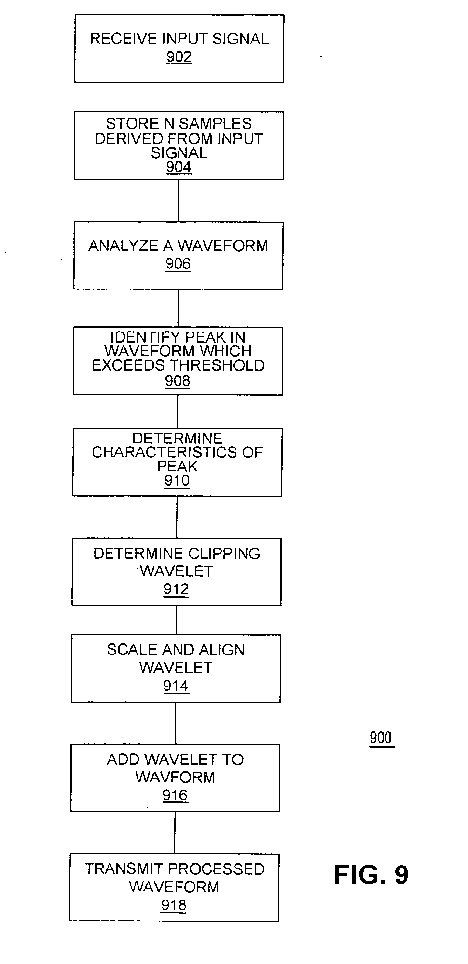

Fig. 9 is a flow chart illustrating an embodiment of a method 900 of the invention. Initially an input signal is received 902. The input signal can be for example a CDMA signal, or any of wide range of other signals. A sufficient number of input waveform samples derived from the input signal are stored 904 in a memory. The stored waveform is then analyzed 906. The analysis of the waveform includes identifying 908 any peak in the waveform which exceeds the clipping threshold. Where a peak is identified that exceeds the clipping threshold the characteristics of the peak are determined 910. The characteristics of the peak could include for example, identifying the shape of the peak, the magnitude of the peak, and specifically the amount by which the peak exceeds the clipping threshold, and the location of the peak. Using the characteristics of the peak a clipping wavelet is determined 912. This determination of the clipping wavelet could be done by calculating the required characteristics of the clipping wavelet, or a clipping wavelet library could be used which correlates a different waveform characteristics with different clipping wavelets. After the clipping wavelet has been determined the wavelet can be scaled and aligned 914 with the identified peak. The clipping wavelet is then added 916 to the waveform, which provides a processed waveform having a lower crest factor. Thus, the result of an embodiment of a method of an embodiment of the invention herein is provide for a reduction in the dynamic range of a modulated signal without increasing the out-of-band power of the signal. The processed waveform is then transmitted 918 through the communication system, where the waveform is ultimately received by a receiver and demodulated and the data or information in the waveform can then be utilized in for example a cell phone system or a wi-fi communication system for example. The processing of the input signal is a continuous operation, where as one waveform is being sampled, another waveform can be in the process of being clipped by the addition of the clipping the wavelet, and thus the method provides for a slight delay in the transmission of the signal which is being sampled, and processed.

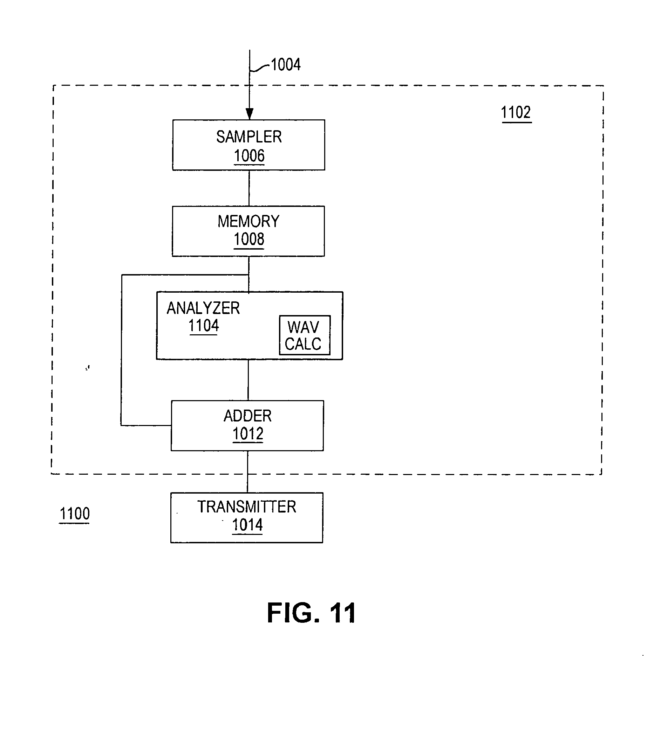

Fig. 10 is a block diagram showing aspects of a communication system 1000. The communication system 1000, includes a crest signal processor system 1002 according to an embodiment of the invention herein. The signal processor system 1002 includes an input where a sampler 1006 of the signal processor captures waveform samples of the input signal 1004. Depending on the embodiment of the signal processing system the sampler could include an analog to digital converter. The waveforms captured by the sampler are then stored in a memory module 1008 of the processor system 1002. An analyzer module 1010 then operates to analyze the waveform to identify characteristics of the peaks which exceed a clipping threshold. Based on the characteristics of a peak which exceeds the clipping threshold the analyzer can determine a suitable clipping wavelet from a wavelet library 1012. The wavelet can then be passed from the memory to an adder module 1012, where the determined clipping wavelet can be added to the waveform. It, should be noted that the analyzer module 1010 could include sub modules which operate to scale and align the phase of the clipping wavelet as described in more detail above. The adder module 1012 then outputs the processed waveform. Additional processing modules (not shown) can be provided which further process the waveform, which is ultimately transmitted by the transmitter 1014 of the communication system 1002.

Fig. 11 shows a block diagram of an alternative embodiment of a system 1100 of the invention. In many respects the system 1100 is very similar to the system 1000 described above. Thus, where a module shown in the Fig. 10 is very similar to a corresponding module shown in Fig. 11 the same callout numbers are used in Fig. 11. One significant difference between the embodiments of Fig. 11 and Fig. 10, is that the analyzer module 1104 in Fig. 11 includes a wavelet calculation module which calculates the clipping wavelet based on the determined characteristics of a peak which exceeds the clipping threshold. Because the analyzer 1104 includes a wavelet calculation modulation, the signal processing system 1102 does not need to include clipping wavelet library as provided for in the system 1002 of Fig. 10.

While the embodiments described herein illustrate some possible implementations of the invention. One of skill in the art will recognize that while the Gaussian wavelet worked well for the above example, other finite duration bandwidth limited functions could also be used.

Although only specific embodiments of the present invention are shown and described herein, the invention is not to be limited by these embodiments. Rather, the scope of the invention is to be defined by these descriptions taken together with the attached claims and their equivalents.

## Claims

1. A method (900) of processing a signal in a communication system, the method including:
analyzing (906) a waveform of the signal to identify characteristics of the waveform, wherein the identified characteristics includes identifying (908) a first peak in the waveform which exceeds a clipping threshold;
based on the identified characteristics of the waveform determining (912) a clipping wavelet to add to the waveform;
adding (916) the clipping wavelet to the waveform to provide a processed waveform, wherein the addition of the clipping wavelet to the waveform operates to reduce the first peak below the clipping threshold; and
transmitting (918) the processed waveform.

2. The method of claim 1 further including:
storing (904) the waveform in a memory prior to analyzing the waveform.

3. The method of claim 1 or 2 further including:
providing a library of a plurality of different clipping wavelets;
wherein the determined (912) clipping wavelet is identified from the library of the plurality of different wavelets.

4. The method of one of the preceding claims further wherein the determining (912) the clipping wavelet includes calculating the determined clipping wavelet after analyzing (906) the waveform.

5. The method of one of the preceding claims wherein the determined (912) clipping wavelet is a Gaussian function.

6. A signal processing system (1002) which operates to reduce a crest factor of a received signal (1004), the signal processing system comprising:
an analyzer module (1010) adapted to analyze a waveform of the signal to identify characteristics of the waveform, wherein the identified characteristics includes identifying a first peak of the waveform which exceeds a clipping threshold, and based on the identified characteristics of the waveform, the analyzer module further operates to determine a clipping wavelet to add to the waveform; and
an adder (1012) adapted to add the clipping wavelet to the waveform, wherein the addition of the clipping wavelet to the waveform operates to reduce the first peak below the clipping threshold.

7. The signal processing system of claim 6, further comprising:
a memory module (1008) which stores the waveform while it is being analyzed by the analyzer module.

8. The signal processing system of claim 6 or 7, further comprising:
a library module (1012) containing a plurality of different clipping wavelets; and
wherein the analyzer module (1010) operates to select the determined clipping wavelet from the library of the plurality of different clipping wavelets, based on the identified characteristics.

9. The signal processing system of claim 6, 7 or 8 wherein the analyzer module includes:
a wavelet calculation module which calculates the determined clipping wavelet based on the identified characteristics of the waveform.

10. The signal processing system of claim 6, 7, 8 or 9 the determined clipping wavelet is a Gaussian function.
